# EUROPEAN PATENT APPLICATION

(11) **EP 3 396 559 A1**
(43) Date of publication of application: **31.10.2018**
(21) Application number: 16877613.6
(22) Date of filing: 13.12.2016
(51) Int. Cl.: G06F 17/30

(54) **METHOD AND DEVICE FOR ASSOCIATING NETWORK ITEM AND CALCULATING ASSOCIATION INFORMATION**

(30) Priority: 24.12.2015 CN 201510991548
(71) Applicant: Alibaba Group Holding Limited, Grand Cayman (KY)
(72) Inventor: HUANG, Guangyuan, Hangzhou Zhejiang 311121 (CN)
(74) Representative: Barker Brettell LLP
(86) International application number: PCT/CN2016/109593
(87) International publication number: WO 2017/107802

(57) **Abstract**

A method for associating network items includes: calculating a path weight of a jump path between network items according to jump behaviors of users between the network items during browsing (101); calculating an item weight of each network item as a jumped-to network item according to the path weight of the jump path between the network items (102); and selecting at least one network item as an associated network item of a current network item according to the item weights (103). The competitiveness of a network item is quantified according to the calculation result, and the network items are associated based on the quantified competitiveness. The current network item has a direct competition relationship with the associated network item, and therefore, the network item recommended to a user based on the association relationship better meets the requirement of the user.

## Description

### Technical Field

The present disclosure relates to the field of Internet technologies, and, more particularly, to a method for associating network items and an apparatus for associating network items, as well as a method for calculating association information between network items and an apparatus for calculating association information between network items.

### Background

With the development of Internet technologies, people increasingly conduct e-commerce trading activities over the Internet.

An e-commerce trading platform website usually discovers an association relationship between commodities according to browsing and purchase activities of a user with respect to a certain commodity, so as to know other commodities associated with the commodity from a seller, or recommend other commodities associated with the browsed or bought commodity to a buyer. In a current method of associating commodities, a commodity with high browsing quantity or a large sales volume or a current hot-selling commodity in a category to which a commodity browsed by a user belongs is usually recommended to the user as an associated commodity.

However, commodities belonging to the same category may be targeted to different consumer groups and may have tremendously different prices, and these commodities are not necessarily competitive with each other. Therefore, in the current method of associating commodities, commodities that are not competitive with the commodity browsed or bought by the user may also be associated, and commodities recommended on this basis probably do not meet the requirement of the user.

### Summary

In view of the foregoing problems, a method for associating network items and a corresponding apparatus for associating network items are proposed in example embodiments of the present disclosure, so as to overcome the foregoing problem or at least partially solve the foregoing problem.

In order to solve the foregoing problem, the present disclosure discloses a method for associating network items, including:
calculating a path weight of a jump path between network items according to jump behaviors of users between the network items during browsing;
calculating an item weight of each network item as a jumped-to network item according to the path weight of the jump path between the network items; and
selecting at least one network item as an associated network item of a current network item according to item weights.

Optionally, the step of calculating an item weight of each network item as a jumped-to network item according to the path weight of the jump path between the network items includes:
calculating an item weight of a second-level network item as a jumped-to network item according to a path weight of a jump path from a starting first-level network item to the jumped-to second-level network item as well as an initial item weight of the first-level network item; and
iterating, according to the path weight and the item weight of the second-level network item, to calculate an item weight of an N^{th}-level network item, wherein N is greater than 2.

Optionally, the step of calculating a path weight of a jump path between network items according to jump behaviors of users between the network items during browsing includes:
calculating a competitive jump quantity of a jump path between the network items according to a jump quantity between the network items and a browsing quantity of the jumped-to network item; and
computing a proportion of a competitive jump quantity of a jump path from a network item in competitive jump quantities of all jump paths from the network item, to obtain a path weight of the jump path between all the network items.

Optionally, all the network items belong to the same network item category, and the step of calculating a competitive jump quantity of a jump path between the network items according to a jump quantity between the network items and a browsing quantity of the jumped-to network item includes:
computing a browse-to-purchase conversion rate of the item category to which the network items belong by using a total browsing quantity and a total purchase volume of all network items in the network item category to which the network items belong;
using the product of a purchase volume of the jumped-to network item and the browse-to-purchase conversion rate as a browsing quantity of the jumped-to network item; and
using the sum of the browsing quantity of the jumped-to network item and the jump quantity between all the network items as the competitive jump quantity between all the network items.

Optionally, before the step of calculating a path weight of a jump path between network items, the method further includes:
acquiring purchase volumes of the network items from a network item purchasing log and acquiring browsing quantities of the network items as well as a jump quantity between the network items from a network item browsing log.

Optionally, the step of calculating an item weight of a second-level network item as a jumped-to network item according to a path weight of a jump path from a starting first-level network item to the jumped-to second-level network item as well as an initial item weight of the first-level network item includes:
searching for at least one first-level network item that is redirected to the second-level network item; and
computing the product of the path weight of the jump path from the first-level network item to the second-level network item, the initial item weight, and a preset iteration damping coefficient to serve as the item weight of the second-level network item.

Optionally, the step of iterating according to the path weight and the item weight of the second-level network item to calculate an item weight of an N^{th}-level network item includes:
for the N^{th}-level network item, searching for an (N-1)^{th}-level network item that is redirected to the N^{th}-level network item; and
computing the product of a path weight of a jump path from the (N-1)^{th}-level network item to the N^{th}-level network item, an item weight of the (N-1)^{th}-level network item, and the iteration damping coefficient to serve as the item weight of the N^{th}-level network item.

Optionally, before the step of selecting at least one network item according to the item weights, the method further includes:
using the network items as nodes, and using a jump path between a starting network item and a jumped-to network item as a directional side connecting the nodes, to generate a node network graph that records competitive jump paths between the network items; and
transferring node identifiers of an N^{th}-level node and an (N-1)^{th}-level node adjacent to the N^{th}-level node to an (N+1)^{th}-level node and storing the node identifiers.

Optionally, the step of transferring node identifiers of an N^{th}-level node and an (N-1)^{th}-level node adjacent to the N^{th}-level node to an (N+1)^{th}-level node and storing the node identifiers includes:
associating the node identifier of the (N-1)^{th}-level node with the adjacent N^{th}-level node; and
sending the node identifier of the N^{th}-level node and node identifiers of multiple (N-1)^{th}-level nodes associated with the N^{th}-level node to the adjacent (N+1)^{th}-level node and storing the node identifiers.

Optionally, the step of selecting at least one network item as an associated network item of a current network item according to the item weights includes:
selecting at least one network item as the associated network item according to item weights corresponding to the node identifiers of the N^{th}-level node and the (N-1)^{th}-level node that are stored in the (N+1)^{th}-level node corresponding to the current network item.

In order to solve the foregoing problem, the present disclosure further discloses a method for calculating association information between network items, including:
calculating a path weight of a jump path between network items according to jump behaviors of users between the network items during browsing; and
calculating an item weight of each network item as a jumped-to network item according to the path weight of the jump path between the network items.

Optionally, the method further includes:
pushing the item weight to a supplier of the network item.

In order to solve the foregoing problem, the present disclosure further discloses an apparatus for associating network items, including:
a path weight calculation module configured to calculate a path weight of a jump path between network items according to jump behaviors of users between the network items during browsing;
an item weight calculation module configured to calculate an item weight of each network item as a jumped-to network item according to the path weight of the jump path between the network items; and
an associated network item selecting module configured to select at least one network item as an associated network item of a current network item according to the item weights.

Optionally, the item weight calculation module includes:
an item weight calculation sub-module configured to calculate an item weight of a second-level network item as a jumped-to network item according to a path weight of a jump path from a starting first-level network item to the jumped-to second-level network item as well as an initial item weight of the first-level network item; and
an item weight iterative calculation sub-module configured to iterate, according to the path weight and the item weight of the second-level network item, to calculate an item weight of an N^{th}-level network item, wherein N is greater than 2.

Optionally, the path weight calculation module includes:
a competitive jump quantity calculation sub-module configured to calculate a competitive jump quantity of a jump path between the network items according to a jump quantity between the network items and a browsing quantity of the jumped-to network item; and
a competitive jump quantity proportion computing sub-module configured to compute a proportion of a competitive jump quantity of one jump path from a network item in competitive jump quantities of all jump paths from the network item, to obtain a path weight of a jump path between all the network items.

Optionally, all the network items belong to the same network item category, and the competitive jump quantity calculation sub-module includes:
a browse-to-purchase conversion rate computing sub-module configured to compute a browse-to-purchase conversion rate of the item category to which the network items belong by using a total browsing quantity and a total purchase volume of all network items in the network item category to which the network items belong;
a browsing quantity computing sub-module configured to use the product of a purchase volume of the jumped-to network item and the browse-to-purchase conversion rate as a browsing quantity of the jumped-to network item; and
a competitive jump quantity computing sub-module configured to use the sum of the browsing quantity of the jumped-to network item and the jump quantity between all the network items as the competitive jump quantity between all the network items.

Optionally, the apparatus further includes:
a purchase volume and jump quantity acquisition module configured to acquire purchase volumes of the network items from a network item purchasing log and acquire browsing quantities of the network items as well as a jump quantity between the network items from a network item browsing log.

Optionally, the item weight calculation sub-module includes:
a first-level network item searching sub-unit configured to search for at least one first-level network item that is redirected to the second-level network item; and
a second-level network item computing sub-module configured to compute the product of the path weight of the jump path from the first-level network item to the second-level network item, the initial item weight, and a preset iteration damping coefficient to serve as the item weight of the second-level network item.

Optionally, the item weight iterative calculation sub-module includes:
an (N-1)^{th}-level network item searching sub-unit configured to: for the N^{th}-level network item, search for an (N-1)^{th}-level network item that is redirected to the N^{th}-level network item; and
an N^{th}-level network item computing sub-module configured to compute the product of a path weight of a jump path from the (N-1)^{th}-level network item to the N^{th}-level network item, an item weight of the (N-1)^{th}-level network item, and the iteration damping coefficient to serve as the item weight of the N^{th}-level network item.

Optionally, the apparatus further includes:
a node network graph generation module configured to use the network items as nodes and use a jump path between a starting network item and a jumped-to network item as a directional side connecting the nodes to generate a node network graph that records competitive jump paths between the network items; and
a node transfer and storing module configured to transfer node identifiers of an N^{th}-level node and an (N-1)^{th}-level node adjacent to the N^{th}-level node to an (N+1)^{th}-level node and store the node identifiers.

Optionally, the node transfer and storing module includes:
a node association sub-module configured to associate the node identifier of the (N-1)^{th}-level node with the adjacent N^{th}-level node; and
a node identifier sending and storing sub-module configured to send the node identifier of the N^{th}-level node and node identifiers of multiple (N-1)^{th}-level nodes associated with the N^{th}-level node to the adjacent (N+1)^{th}-level node and store the node identifiers.

Optionally, the associated network item selecting module includes:
an associated network item searching sub-module configured to select at least one network item as the associated network item according to item weights corresponding to the node identifiers of the N^{th}-level node and the (N-1)^{th}-level node that are stored in the (N+1)^{th}-level node corresponding to the current network item.

In order to solve the foregoing problem, the present disclosure further discloses an apparatus for calculating association information between network items, including:
a path weight calculation module configured to calculate a path weight of a jump path between network items according to jump behaviors of users between the network items during browsing; and
an item weight calculation module configured to calculate an item weight of each network item as a jumped-to network item according to the path weight of the jump path between the network items.

Optionally, the apparatus further includes:
an item weight pushing module configured to push the item weight to a supplier of the network item.

The example embodiments of the present disclosure have the following advantages:

The example embodiments of the present disclosure discover an implicit competition relationship between network items by conducting statistics on jump behaviors of users between the network items during browsing, quantify the competitiveness of the network items according to the statistical result, and associate the network items based on the quantified competitiveness. The current network item has a direct competition relationship with the associated network item, and the network item recommended to a user based on the association relationship better meets the requirement of the user, thus improving user experience.

Moreover, in the conventional method for associating network items, a browsing relationship between two network items is computed statically and separately, while mutual effects caused by mutual jump relationships between multiple network items during browsing are ignored. In the example embodiments of the present disclosure, an item weight of a jumped-to (N+1)^{th}-level network item is computed by iteration based on item weights of multiple N^{th}-level network items, so that dynamic mutual effects between all the network items may be measured, and the network items associated on this basis are better consistent with an actual association state.

### Brief Description of the Drawings

FIG. 1 is a flowchart of a method for associating network items according to example embodiment 1 of the present disclosure;
FIG. 2 is a flowchart of a method for associating network items according to example embodiment 2 of the present disclosure;
FIG. 3 is a flowchart a method for calculating association information between network items according to an example embodiment of the present disclosure;
FIG. 4 is a structural block diagram of an apparatus for associating network items according to example embodiment 1 of the present disclosure;

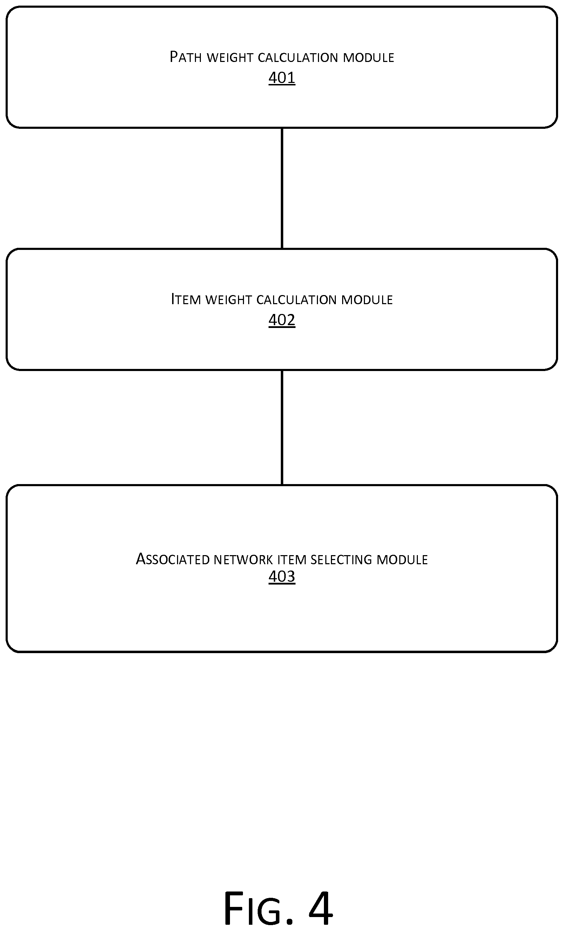

FIG. 4 is a structural block diagram of an apparatus for associating network items according to example embodiment 2 of the present disclosure;

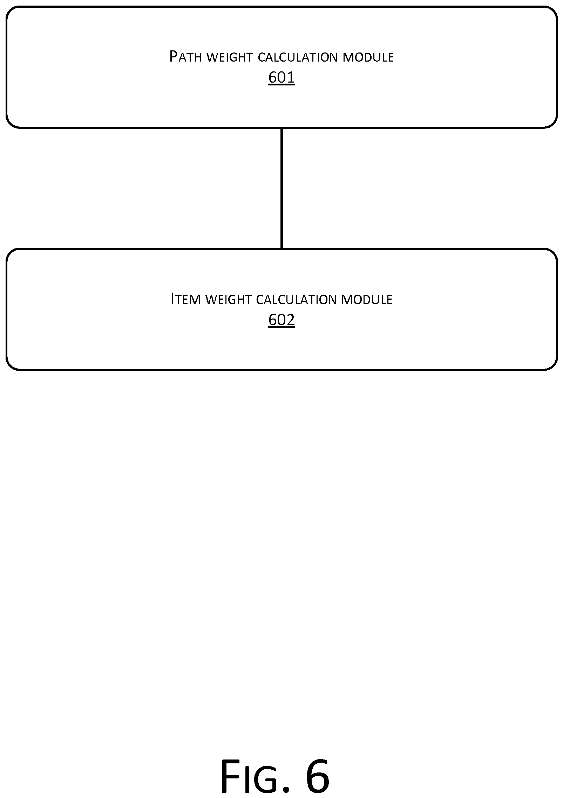

FIG. 6 is a structural block diagram of an apparatus for calculating association information between network items according to an example embodiment of the present disclosure;

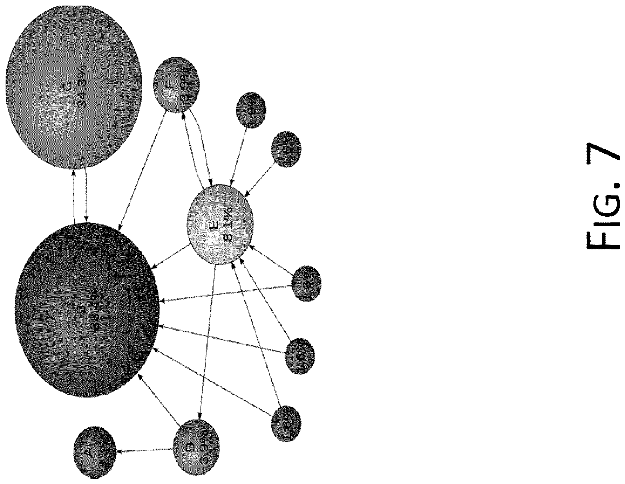

FIG. 7 is a schematic diagram of a Page Rank algorithm according to the present disclosure; and

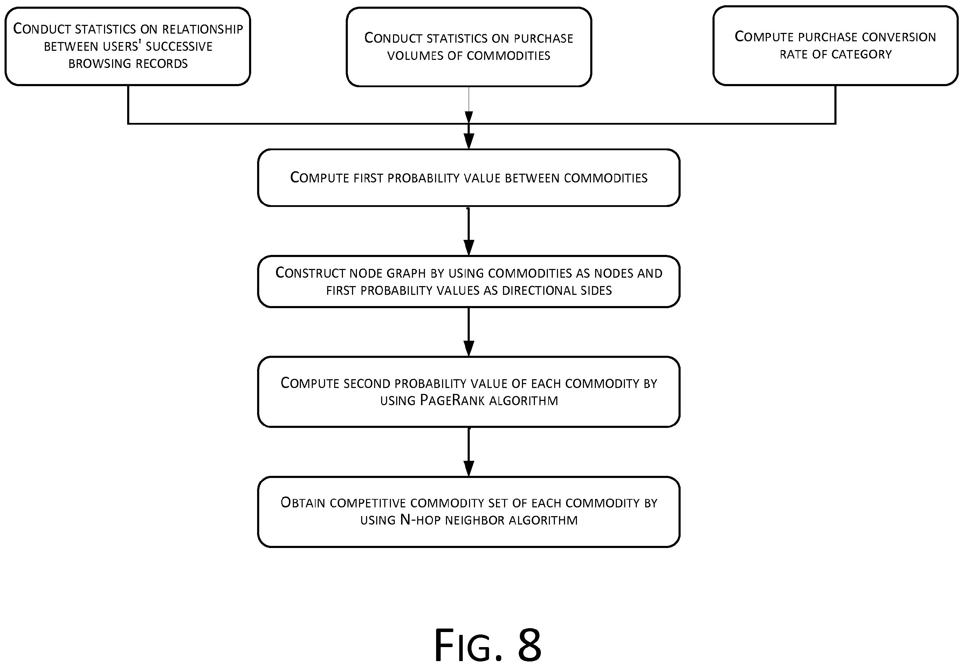

FIG. 8 is a flowchart of a method for associating commodities according to the present disclosure.

### Detailed Description

To make the foregoing objectives, features and advantages of the present disclosure clearer, the present disclosure is described in further detail below with reference to the accompanying drawings and example embodiments.

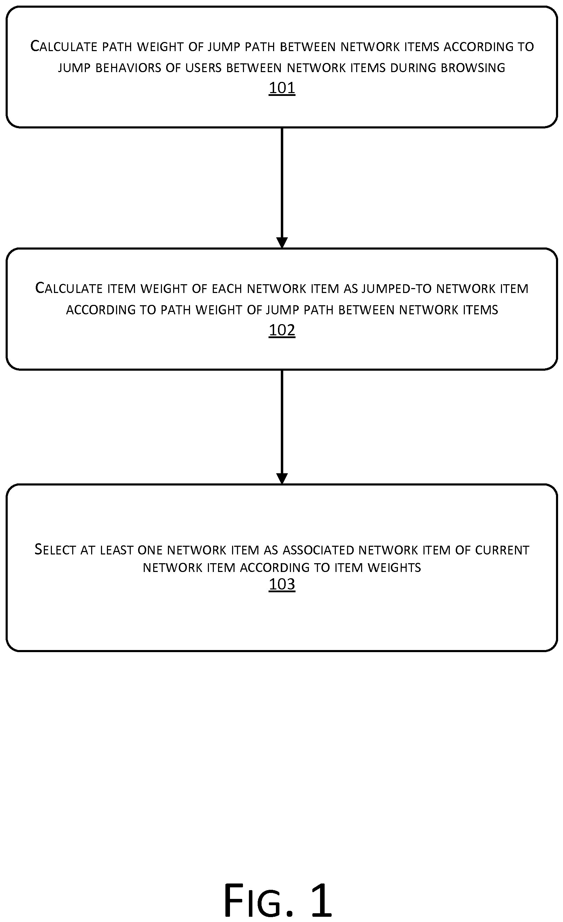

Referring to FIG. 1, a flowchart of steps of a method for associating network items according to example embodiment 1 of the present disclosure is shown. The method may specifically include the following steps.

Step 101: A path weight of a jump path between network items is calculated according to jump behaviors of users between the network items during browsing.

The network item may be a commodity, software, a video, an audio, and other network items that may be selected by a user for purchase. It should be noted that a prior network item browsed by the user and a jumped-to network item browsed by the user later are usually considered by the user as associated candidate network items that the user may choose to buy and have a direct or indirect competition relationship. An implicit competition relationship between network items may be dug out based on a jump browsing behavior of the user between the network items.

In an actual application, an e-commerce platform usually will record a jump behavior (i.e., browsing a network item and then jumping to another network item) of a user during browsing in a browsing jump record log or in a record log after the user browses the network items. The quantity of users' jumps between network items during browsing may be acquired from the browsing jump record log of the network items. Specifically, for users who jump between network items during browsing, the number of users having identical jump behaviors during browsing in a particular period of time will be counted as a jump browsing quantity between network items. A jump browsing quantity between a prior browsed network item and a jumped-to network item that is browsed later may be divided by the sum of jump browsing quantities between the prior browsed network item and all jumped-to network items, and the quotient may be used as a path weight, to indicate a probability value of a jump from the prior browsed network item to a particular network item with respect to jumps to other network items.

It should be noted that in addition to reflecting a competition relationship between network items, the path weight may also quantify the intensity of the competition relationship by using specific numerical values.

Those skilled in the art may further calculate the path weight between network items with reference to users' purchase behaviors with respect to the network items. For example, a path weight may be computed in a weighting manner based on a purchase volume of a jumped-to network item in combination with a jump quantity during browsing, so that the path weight is obtained after a purchase factor is considered comprehensively, thus reflecting the competition relationship between the network items involved in a jump more compressively while ensuring the convergence of a computation model in an application.

Step 102: An item weight of each network item as a jumped-to network item is calculated according to the path weight of the jump path between the network items.

It should be noted that in order to differentiate network items browsed before and after a jump, a starting network item is defined as a first-level network item, a network item after the first jump is a second-level network item, a network item after the second jump from the second-level network item is a third-level network item, and so on. A network item after N jumps from the first-level network item is an (N+1)^{th}-level network item.

An item weight of an (N+1)^{th}-level network item may be computed by using a path weight from an N^{th}-level network item to the (N+1)^{th}-level network item in combination with an item weight of the N^{th}-level network item. The item weight of the (N+1)^{th}-level network item may be computed in multiple specific manners. For example, the path weight from the N^{th}-level network item to the (N+1)^{th}-level network item is multiplied by the item weight of the N^{th}-level network item to obtain the item weight of the (N+1)^{th}-level network item.

In an actual application, one second-level network item may be a jumped-to object of multiple first-level network items, that is, one (N+1)^{th}-level network item may be a jumped-to object of multiple N^{th}-level network items. Therefore, the item weight of the (N+1)^{th}-level network item may be finally calculated by using path weights from multiple N^{th}-level network items to the (N+1)^{th}-level network item as well as item weights of the N^{th}-level network items.

The path weight from the N^{th}-level network item to the (N+1)^{th}-level network item may reflect the intensity of the competition relationship between the N^{th}-level network item and the (N+1)^{th}-level network item. The item weight of the N^{th}-level network item may reflect the competitiveness of the network item itself. The item weight of the (N+1)^{th}-level network item may be obtained based on the item weight of the N^{th}-level network item and the path weight from the N^{th}-level network item to the (N+1)^{th}-level network item. That is, the competitiveness of one network item is determined by the competitiveness of all other network items that are redirected to the network item, and a greater item weight represents higher competitiveness of the network item.

The competition between a network item after multiple jumps and the starting network item may be attenuated. Therefore, a damping coefficient less than 1 may be set during computation, so that the item weight may reflect a relationship between the number of jumps and the competition attenuation degree. Certainly, those skilled in the art may also set different parameters according to actual situations to compute the item weight.

According to a preferred example of this example embodiment of the present disclosure, step 102 may include the following sub-steps.

Sub-step S 11: An item weight of a second-level network item as a jumped-to network item is calculated according to a path weight of a jump path from a starting first-level network item to the jumped-to second-level network item as well as an initial item weight of the first-level network item.

Because the starting first-level network item does not have an item weight, the initial item weight of the first-level network item may be preset as 1 during calculation of the item weight of the second-level network item. The preset initial item weight is multiplied by the path weight from the first-level network item to the second-level network item, and the product is used as the item weight of the second-level network item. That is, the item weight of the first-level network item is still its path weight. Certainly, those skilled in the art may set different initial item weights according to actual situations.

As a preferred example of this example embodiment of the present disclosure, sub-step S11 may include the following sub-steps.

Sub-step S11-1: At least one first-level network item that is redirected to the second-level network item is searched for.

Sub-step S11-2: The product of the path weight of the first-level network item and a preset iteration damping coefficient is computed as the item weight of the second-level network item.

During computation of the item weight of the second-level network item, multiple first-level network items that are redirected to the second-level network item may be searched for, and a path weight of the first-level network item is multiplied by the preset iteration damping coefficient to obtain the item weight of the second-level network item. The competition between a network item after multiple jumps and the starting network item may be attenuated. Therefore, a damping coefficient less than 1 may be set during computation, so that the item weight may reflect a relationship between the number of jumps and the competition attenuation degree. Those skilled in the art may set a specific iteration damping coefficient according to actual situations. As a preferred example of the present disclosure, the iteration damping coefficient may be set as any numerical value in the range of [0.8, 1], for example, 0.85.

Sub-step S12: Iteration is performed to calculate an item weight of an N^{th}-level network item according to the path weight and the item weight of the second-level network item, wherein N is greater than 2.

A jump relationship between network items may be bidirectional. Therefore, the item weight of each network item may also become a variant of another item weight. Therefore, the item weight of the network item may be constantly updated by means of iterative computation, and the computation is not stopped until the maximum iterative computation times is reached or until the item weight of each network item becomes stable. Dynamic mutual effects between all the network items may be measured by means of the foregoing recursive operation, so that the network items may be associated dynamically.

In an actual application, those skilled in the art may calculate item weights in other manners according to actual situations. For example, a graph algorithm Page Rank may be used for implementation. Specifically, referring to the schematic diagram of the Page Rank algorithm shown in FIG. 7, network items A, B, C, D, E and F are used as nodes A, B, C, D, E and F respectively, and a network item before the jump and a jumped-to network item are connected by using a directional side for measuring a path weight between the two network items, to generate a node network graph that records jump relationships between the network items. Path weights of all directional sides are computed. An item weight of a jumped-to node may be computed by using a path weight of a directional side and an item weight of a node before the jump, so that item weights of all the nodes in the node network graph may be computed. In the figure, the area of a circle represents the value of an item weight.

It may be seen from the figure that one node may be pointed to by multiple nodes, representing that multiple nodes are redirected to the node; therefore, the node has a relatively high item weight, indicating relatively strong competitiveness of the node, for example, the node B. In addition, there may be directional sides along both directions between nodes, for example, the node B and the node C. It should be noted that the item weight of a jumped-to node is not only related to the number of previous-level nodes and a path weight from each previous-level node to the node, but also related to a second probability value of each previous-level node. Here, although only one node, i.e., the node B, is redirected to the node C, since the node B has a relatively high item weight, the node C also has a relatively high item weight. It may be understood that, in a real scenario, if a user jumps to a network item from another network item having relatively high competitiveness, it may indicate that the jumped-to network item also has relatively high competitiveness. However, for another node E, although multiple nodes with small areas are redirected to the node E, the item weight of the node E is still relatively small because the item weights of the small nodes are relatively small, indicating that the network item E is not very competitive.

In addition, the item weights may also be computed by using Personalized Page Rank. This example embodiment of the present disclosure does not limit the specific implementation.

Step 103: At least one network item is selected as an associated network item of a current network item according to the item weights.

Multiple network items associated with a certain network item may be acquired based on the foregoing steps, and the acquired network items may be further screened. In a specific implementation manner, a network item whose item weight is in a preset range may be selected as an associated network item of the current network item; or the item weights of the multiple network items are sorted, and several top-ranking network items are taken as associated network items of the current network item.

It should be noted that the foregoing association method is not only applicable to association between network items, but also applicable to association between commodity brands, commodity subclasses, and so on. Those skilled in the art may expand the core idea provided by the present disclosure to association between other items.

According to this example embodiment of the present disclosure, an implicit competition relationship between network items is dug out by conducting statistics on jump behaviors of users between the network items during browsing, the competitiveness of the network items is quantified according to the statistical result, and the network items are associated based on the quantified competitiveness. The current network item has a direct competition relationship with the associated network item, and the network item recommended to a user based on the association relationship better meets the requirement of the user, thus improving user experience.

Moreover, in the current method for associating network items, a browsing relationship between two network items is computed statically and separately, while mutual effects caused by mutual jump relationships between multiple network items during browsing are ignored. In this example embodiment of the present disclosure, an item weight of a jumped-to (N+1)^{th}-level network item is computed by iteration based on item weights of multiple N^{th}-level network items, so that dynamic mutual effects between all the network items may be measured, and the network items associated on this basis are better consistent with an actual network item association relationship.

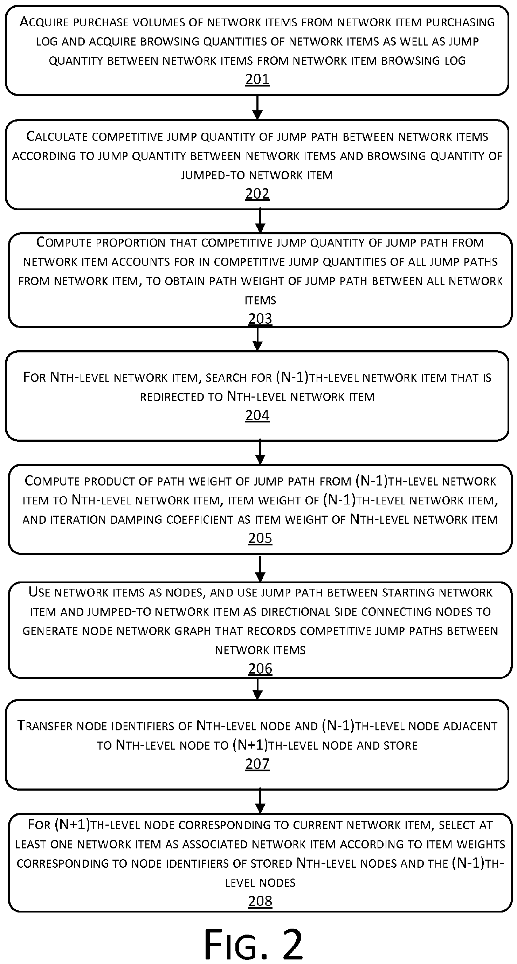

Referring to FIG. 2, a flowchart of a method for associating network items according to example embodiment 2 of the present disclosure is shown. Specifically, the method may include the following steps.

Step 201: Purchase volumes of network items are acquired from a network item purchasing log and browsing quantities of the network items as well as a jump quantity between the network items are acquired from a network item browsing log.

Purchase volumes of network items may be acquired from a network item purchasing log. In an actual application, if a user browses a certain network item and jumps to browse another network item and finally buys the other network item, it indicates a competition relationship between the jumped-to network item and the starting network item more clearly. Moreover, a seller user is more concerned about whether the network item is finally purchased. Therefore, a competition relationship between network items before and after a jump may be reflected more comprehensively by taking purchase volumes of the network items into consideration during computation of a path weight. In addition, a browsing quantity of network items and the quantity of jumps conducted by users from one network item to another network item during browsing may be acquired from a network item browsing log.

Step 202: A competitive jump quantity of a jump path between the network items is calculated according to the jump quantity between the network items and a browsing quantity of the jumped-to network item.

The quantity of jumps from a first-level network item to a target network item in a particular period of time may be acquired from the network item browsing log.

It should be noted that in order to weight a browsing quantity and a purchase volume of a network item, a jump quantity between network items and a purchase volume of a jumped-to network item may be directly summed up to calculate the foregoing competitive jump quantity. However, the purchase volume has a smaller order of magnitude with respect to the jump quantity in practice, and a weighting effect cannot be achieved if the purchase volume and the jump quantity are directly added up. Therefore, the order of magnitude of the purchase volume may be converted correspondingly, so that the purchase volume may be transformed into a browsing quantity of the network item. For example, the purchase volume is multiplied by a browse-to-purchase conversion rate of a network item category to which the network item belongs, to obtain a browsing quantity of the jumped-to network item. As such, the numerical values that are added up have the same order of magnitude, thus achieving a weighting effect. Certainly, those skilled in the art may also use other parameters to achieve the same weighting effect.

The jump quantity may be added with the converted browsing quantity, and an obtained numerical value is used as the competitive jump quantity between the network items. When one network item has multiple jumped-to network items, the network item has multiple competitive jump quantities with other network items.

As a preferred example of this example embodiment of the present disclosure, all the network items belong to the same network item category, and step 202 may include the following sub-steps.

Sub-step S21: A browse-to-purchase conversion rate of the item category to which the network items belong is computed by using a total browsing quantity and a total purchase volume of all network items in the network item category to which the network items belong.

Because network items having a direct competition relationship generally belong to the same network item category, the network items before and after the jump may be limited in the same network item category. A total browsing quantity of all network items in the same network item category may be divided by a total purchase volume of all the network items, and the ratio is used as a browse-to-purchase conversion rate of the network item category.

Sub-step S22: The product of a purchase volume of the jumped-to network item and the browse-to-purchase conversion rate is used as a browsing quantity of the jumped-to network item.

Sub-step S23: The sum of the browsing quantity of the jumped-to network item and the jump quantity between all the network items is used as the competitive jump quantity between all the network items.

The purchase volume of the jumped-to network item is multiplied by the purchase conversion rate, to obtain a browsing quantity of the jumped-to network item. Then, the browsing quantity of the jumped-to network item is added with the jump quantity between all the network items, to obtain the competitive jump quantity between all the network items.

For example, if one hundred users jump to browse a network item b after browsing a network item a in one week, the jump quantity is 100, recorded as Browse(a, b)=100. If five users purchase the network item b after the one hundred users browse the network item b, the purchase volume of the network item b is 5, recorded as Purchase(b)=5. A total browsing quantity of multiple network items in a network category to which the network items a and b belong is recorded as 10000, and a total purchase volume is recorded as 1000. According to Rate(a)=Rate(b)=total browsing quantity/total purchase volume, it may be computed that the purchase conversion rate is 10000/1000=10. It may be computed that the competitive jump quantity W(a, b) is 150 according to a computing formula of the competitive jump quantity: W(a, b)=Browse(a, b)+Rate(a)*Purchase(b).

Step 203: A proportion of a competitive jump quantity of a jump path from a network item in competitive jump quantities of all jump paths from the network item is computed, to obtain a path weight of a jump path between all the network items.

Any one network item may be redirected to multiple other network items. By computing a proportion of a competitive jump quantity between the network item and a certain jumped-to network item in a total of competitive jump quantities between the network item and all jumped-to network items, a path weight between the network items may be obtained.

For example W'(a, b)=W(a, b)/∑W(a, i), wherein W'(a, b) represents a path weight; and ∑W(a, i) represents a total of competitive jump quantities between the first-level network item and all jumped-to target network items. When the network item a has a jumped-to network item b and a jumped-to network item c, W'(a, b) and W'(a, c) are computed respectively, wherein the computing processes are W'(a, b)=W(a, b)/[W(a, b)+W(a, c)] and W'(a, c)=W(a, c)/[W(a, b)+W(a, c)] respectively.

Step 204: For an N^{th}-level network item, an (N-1)^{th}-level network item that is redirected to the N^{th}-level network item is searched for.

Step 205: The product of a path weight of a jump path from the (N-1)^{th}-level network item to the N^{th}-level network item, an item weight of the (N-1)^{th}-level network item, and an iteration damping coefficient is computed as an item weight of the N^{th}-level network item.

Step 206: The network items are used as nodes, and the jump path between the starting network item and the jumped-to network item is used as a directional side connecting the nodes, to generate a node network graph that records competitive jump paths between network items.

Jump relationships between network items may be abstracted into a complex network. Specifically, each network item may be taken as a node. A network item before the jump and a jumped-to network item are connected by using a directional side for measuring a path weight between the two network items, to generate a node network graph that records jump relationships between the network items.

Based on the node network graph, related graph theory-based algorithms such as Page Rank and Personalized Page Rank may be used. The Page Rank algorithm is originally used for computing web page ranks according to mutual hyperlink status between web pages, and the Personalized Page Rank algorithm may be construed as an expansion of the Page Rank. The difference lies in that Personalized Page Rank may compute a list of nodes that are most important to each point. In an actual application, related graph algorithms may be implemented by using Spark GraphX.

Specifically, in the process of computing the item weight of each node in the node network graph by using Page Rank, for an N^{th}-level network item, multiple (N-1)^{th}-level network items that are redirected to the N^{th}-level network item may be searched for, and a path weight from each of the (N-1)^{th}-level network items to the N^{th}-level network item may be calculated. The path weight is multiplied by an item weight of the (N-1)^{th}-level network item that has already been obtained through computing and then multiplied by the iteration damping coefficient to obtain the item weight of the N^{th}-level network item.

A specific computing algorithm may be as follows: PR(N)=EPR(N-1)*W'(N-1, N)*alpha, wherein PR(N) represents the item weight of the N^{th}-level network item, PR(N-1) represents the item weight of the (N-1)^{th}-level network item, W'(N-1, N) represents the path weight of the jump path from the (N-1)^{th}-level network item to the N^{th}-level network item, and alpha is the product of iteration damping coefficients. Each PR value is 1 initially, and iterative computation is performed based on the formula, to update the item weights of the nodes that represent the network items in the node network graph.

Certainly, those skilled in the art may use different computing formulas according to actual situations, to adjust the method of computing item weights correspondingly. For example, the formula PR(N)=∑PR(N-1)*W'(N-1, N)*alpha+(1-alpha) may be used to compute item weights.

The item weights of the nodes are obtained after the computation based on the Page Rank algorithm, that is, the competitiveness of each network item is obtained.

Step 207: Node identifiers of the N^{th}-level node and the (N-1)^{th}-level node adjacent to the N^{th}-level node are transferred to an (N+1)^{th}-level node and are stored.

Based on the constructed node network graph, a set of associated network items of the current network item may be obtained by using an N-hop neighbor graph algorithm. Specifically, node identifiers of the N^{th}-level node and the adjacent (N-1)^{th}-level node are transferred to an (N+1)^{th}-level node, so that the (N+1)^{th}-level node stores multiple node identifiers of the (N-1)^{th}-level node and the N^{th}-level node.

A one-hop neighbor usually has a direct competition relationship with the current network item, a two-hop neighbor usually has an indirect competition relationship with the current network item, and so on. A network item after a greater number of jumps is less competitive with the current network item. By using two-hop neighbors as a boundary, a set of neighbors within two hops from the current network item is obtained, and the subsequent network item association is carried out based on the set.

As a preferred example of this example embodiment of the present disclosure, step 207 may include the following sub-steps.

Sub-step S31: The node identifier of the (N-1)^{th}-level node is associated with the adjacent N^{th}-level node.

Sub-step S32: The node identifier of the N^{th}-level node and node identifiers of multiple (N-1)^{th}-level nodes associated with the N^{th}-level node are sent to the adjacent (N+1)^{th}-level node and stored in the (N+1)^{th}-level node.

As a preferred implementation manner, initialization processing may be performed first. A neighbor set of each node is empty, and then each node sends its own node identifier to neighboring second-level nodes. The second-level nodes store received node identifiers to obtain a one-hop neighbor node identifier set NOneHop of each first-level node, so as to establish an association relationship with adjacent nodes. Each second-level node then sends NOneHop to neighboring second-level nodes. Each second-level node stores received NOneHop. In this case, node identifiers that already appeared in NOneHop of each node may be removed, to obtain a two-hop neighbor node identifier set NTwoHop of each node. Therefore, NTwoHop includes node identifiers of multiple second-level nodes and node identifiers of multiple first-level nodes associated with the second-level nodes.

Step 208: For the (N+1)^{th}-level node corresponding to the current network item, at least one network item is selected as the associated network item according to item weights corresponding to the node identifiers of the stored N^{th}-level node and the (N-1)^{th}-level node.

When the (N+1)^{th}-level node is used as the current network item, a network item corresponding to a particular node identifier may be searched for in the stored node identifiers of the N^{th}-level node and the (N-1)^{th}-level node. A searching method may be searching for a network item whose item weight is in a preset range. For example, the item weights are sorted, and top-K network items are searched for, to serve as associated network items of the current network item.

According to this example embodiment of the present disclosure, a node network graph is constructed based on jump relationships between network items, and dynamic mutual effect relationships between network items are obtained by computing an item weight of each node in the node network graph through iteration based on a graph algorithm. As such, direct and indirect competition relationships between network items as well as the competitiveness of each network item may be reflected accurately and comprehensively.

Moreover, based on the topology of the node network graph, this example embodiment of the present invention uses a network item having a direct competition relationship as an associated network item of the current network item. The associated network item recommended to a user on this basis better meets the requirement of the user, thus improving user experience.

To help those skilled in the art to understand this example embodiment of the present disclosure, FIG. 8 shows a flowchart of steps of a method for associating commodities. It may be seen from the figure that statistics on a relationship between users' successive browsing records of two commodities may be conducted first, purchase volumes of the commodities are calculated, and a purchase conversion rate of a category to which the commodities belong is computed. Then, a path weight between the commodities is computed. A node graph is constructed by using commodities as nodes and using path weights between the commodities as directional sides. An item weight of each commodity node is computed by using a Page Rank algorithm, and a competitive commodity set of each commodity is obtained by using an N-hop neighbor algorithm.

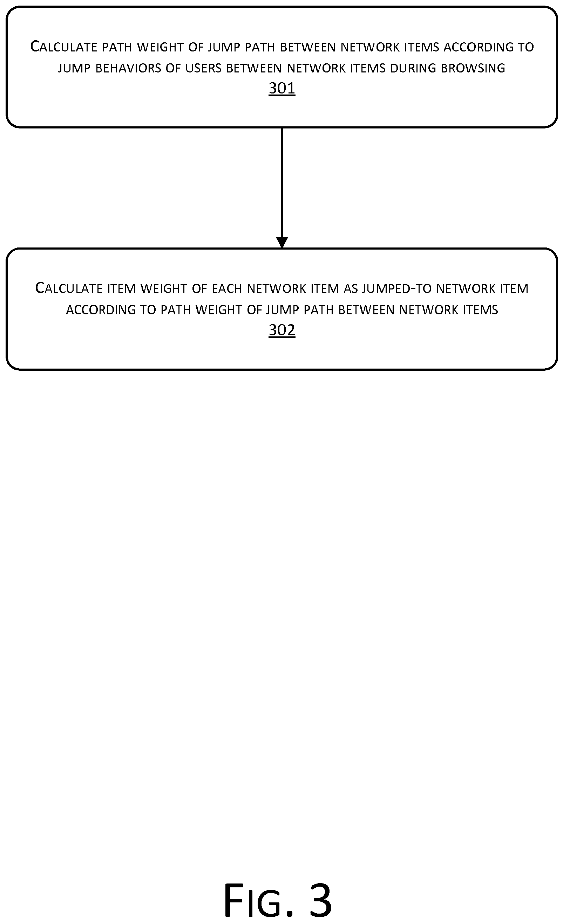

Referring to FIG. 3, a flowchart of a method for calculating association information between network items according to an example embodiment of the present disclosure is shown. Specifically, the method may include the following steps.

Step 301: A path weight of a jump path between network items is calculated according to jump behaviors of users between the network items during browsing.

Step 302: An item weight of each network item as a jumped-to network item is calculated according to the path weight of the jump path between the network items.

As a preferred example of this example embodiment of the present invention, the method may further include:
pushing the item weight to a supplier of the network item.

A network item supplier on an e-commerce platform will usually make a corresponding sales policy or improves the commodity according to the competitiveness of its own network item among same-category commodities. Therefore, the item weight of the network item may be provided for the user. Certainly, the path weight may also be pushed in an actual application, so that the user may know the competition status between network items. In addition, the path weight and the item weight may also be pushed to a buyer user, so that the user knows more association information of the commodity.

It should be noted that the example embodiment of the method for calculating association information between network items in the present invention is similar to the example embodiment of the method for associating network items, and details are not described again. For related parts, reference may be made to the method for calculating association information.

According to this example embodiment of the present invention, based on jump behaviors of users between network items during browsing, a path weight between network items before and after a jump and an item weight of the jumped-to network item are calculated. As such, a direct competition relationship between network items is dug out, and moreover, the intensity of competition between network items having a direct competition relationship and the competitiveness of a particular network item among many network items that have direct competition relationships with the particular network item may be quantified, so that the user may acquire more valuable network item association information.

It should be noted that the foregoing method example embodiments are all expressed as a series of action combinations for ease of description. However, those skilled in the art should know that the example embodiments of the present disclosure are not limited by the described action sequence, because some steps may be performed in other sequences or simultaneously according to the example embodiments of the present disclosure. Secondly, those skilled in the art should also know that the example embodiments described in the specification are all preferred example embodiments, and the actions involved are not mandatory to the present disclosure.

Referring to FIG. 4, a structural block diagram of an apparatus for associating network items according to example embodiment 1 of the present disclosure is shown. Specifically, the apparatus may include the following modules:
a path weight calculation module 401 configured to calculate a path weight of a jump path between network items according to jump behaviors of users between the network items during browsing;
an item weight calculation module 402 configured to calculate an item weight of each network item as a jumped-to network item according to the path weight of the jump path between the network items; and
an associated network item selecting module 403 configured to select at least one network item as an associated network item of a current network item according to the item weights.

This example embodiment of the present disclosure digs out an implicit competition relationship between network items by conducting statistics on jump behaviors of users between the network items during browsing, quantifies the competitiveness of the network items according to the statistical result, and associates the network items based on the quantified competitiveness. The current network item has a direct competition relationship with the associated network item, and the network item recommended to a user based on the association relationship better meets the requirement of the user, thus improving user experience.

Moreover, in the current method for associating network items, a browsing relationship between two network items is computed statically and separately, while mutual effects caused by mutual jump relationships between multiple network items during browsing are ignored. In this example embodiment of the present disclosure, an item weight of a jumped-to (N+1)^{th}-level network item is computed by iteration based on item weights of multiple N^{th}-level network items, so that dynamic mutual effects between all the network items may be measured, and the network items associated on this basis are better consistent with an actual association state.

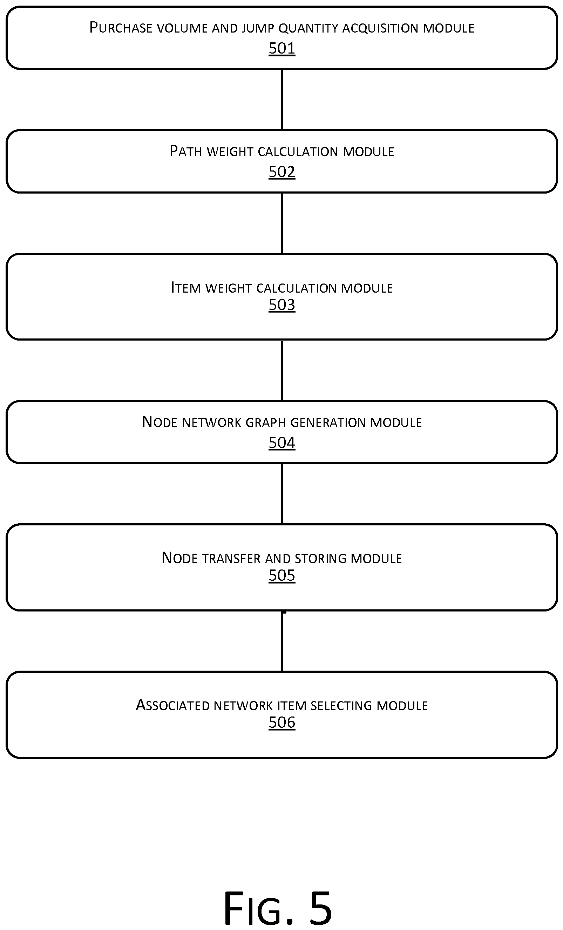

Referring to FIG. 5, a structural block diagram of an apparatus for associating network items according to example embodiment 2 of the present disclosure is shown. Specifically, the apparatus may include the following modules:
a purchase volume and jump quantity acquisition module 501 configured to acquire purchase volumes of network items from a network item purchasing log and acquire browsing quantities of the network items as well as a jump quantity between the network items from a network item browsing log;
a path weight calculation module 502 configured to calculate a path weight of a jump path between network items according to jump behaviors of users between the network items during browsing;
an item weight calculation module 503 configured to calculate an item weight of each network item as a jumped-to network item according to the path weight of the jump path between the network items;
a node network graph generation module 504 configured to use the network items as nodes and use a jump path between a starting network item and a jumped-to network item as a directional side connecting the nodes to generate a node network graph that records competitive jump paths between the network items;
a node transfer and storing module 505 configured to transfer node identifiers of an N^{th}-level node and an (N-1)^{th}-level node adjacent to the N^{th}-level node to an (N+1)^{th}-level node and store the node identifiers; and
an associated network item selecting module 506 configured to select at least one network item as an associated network item of a current network item according to the item weights.

As a preferred example of this example embodiment of the present disclosure, the item weight calculation module 503 may include:
an item weight calculation sub-module configured to calculate an item weight of a second-level network item as a jumped-to network item according to a path weight of a jump path from a starting first-level network item to the jumped-to second-level network item as well as an initial item weight of the first-level network item; and
an item weight iterative calculation sub-module configured to iterate according to the path weight and the item weight of the second-level network item to calculate an item weight of an N^{th}-level network item, wherein N is greater than 2.

As a preferred example of this example embodiment of the present disclosure, the item weight calculation sub-module may include:
a first-level network item searching sub-unit configured to search for at least one first-level network item that is redirected to the second-level network item; and
a second-level network item computing sub-module configured to compute the product of the path weight of the jump path from the first-level network item to the second-level network item, the initial item weight, and a preset iteration damping coefficient to serve as the item weight of the second-level network item.

As a preferred example of this example embodiment of the present disclosure, the path weight calculation module 502 may include:
a competitive jump quantity calculation sub-module configured to calculate a competitive jump quantity of a jump path between the network items according to a jump quantity between the network items and a browsing quantity of the jumped-to network item; and
a competitive jump quantity proportion computing sub-module configured to compute a proportion of a competitive jump quantity of one jump path from a network item in competitive jump quantities of all jump paths from the network item, to obtain a path weight of a jump path between all the network items.

As a preferred example of this example embodiment of the present disclosure, all the network items belong to the same network item category, and the competitive jump quantity calculation sub-module may include:
a browse-to-purchase conversion rate computing sub-module configured to compute a browse-to-purchase conversion rate of the item category to which the network items belong by using a total browsing quantity and a total purchase volume of all network items in the network item category to which the network items belong;
a browsing quantity computing sub-module configured to use the product of a purchase volume of the jumped-to network item and the browse-to-purchase conversion rate as a browsing quantity of the jumped-to network item; and
a competitive jump quantity computing sub-module configured to use the sum of the browsing quantity of the jumped-to network item and the jump quantity between all the network items as the competitive jump quantity between all the network items.

As a preferred example of this example embodiment of the present disclosure, the item weight iterative calculation sub-module may include:
an (N-1)^{th}-level network item searching sub-unit configured to: for the N^{th}-level network item, search for an (N-1)^{th}-level network item that is redirected to the N^{th}-level network item; and
an N^{th}-level network item computing sub-module configured to compute the product of a path weight of a jump path from the (N-1)^{th}-level network item to the N^{th}-level network item, an item weight of the (N-1)^{th}-level network item, and the iteration damping coefficient to serve as the item weight of the N^{th}-level network item.

As a preferred example of this example embodiment of the present disclosure, the node transfer and storing module 505 may include:
a node association sub-module configured to associate the node identifier of the (N-1)^{th}-level node with the adjacent N^{th}-level node; and
a node identifier sending and storing sub-module configured to send the node identifier of the N^{th}-level node and node identifiers of multiple (N-1)^{th}-level nodes associated with the N^{th}-level node to the adjacent (N+1)^{th}-level node and store the node identifiers.

As a preferred example of this example embodiment of the present disclosure, the associated network item selecting module 506 may include:
an associated network item searching sub-module configured to select at least one network item as the associated network item according to item weights corresponding to the node identifiers of the N^{th}-level node and the (N-1)^{th}-level node that are stored in the (N+1)^{th}-level node corresponding to the current network item.

According to this example embodiment of the present disclosure, a node network graph is constructed based on jump relationships between network items, and dynamic mutual effect relationships between network items are obtained by computing an item weight of each node in the node network graph through iteration based on a graph algorithm. As such, direct and indirect competition relationships between network items as well as the competitiveness of each network item may be reflected accurately and comprehensively.

Moreover, based on the topology of the node network graph, this example embodiment of the present disclosure uses a network item having a direct competition relationship as an associated network item of the current network item. The associated network item recommended to a user on this basis better meets the requirement of the user, thus improving user experience.

Referring to FIG. 6, a structural block diagram of an apparatus for calculating association information between network items according to an example embodiment of the present disclosure is shown. Specifically, the apparatus may include the following modules:
a path weight calculation module 601 configured to calculate a path weight of a jump path between network items according to jump behaviors of users between the network items during browsing; and
an item weight calculation module 602 configured to calculate an item weight of each network item as a jumped-to network item according to the path weight of the jump path between the network items.

As a preferred example of this example embodiment of the present disclosure, the apparatus may further include:
an item weight pushing module configured to push the item weight to a supplier of the network item.

According to this example embodiment of the present invention, based on jump behaviors of users between network items during browsing, a path weight between network items before and after a jump and an item weight of the jumped-to network item are calculated. As such, a direct competition relationship between network items is dug out, and moreover, the intensity of competition between network items having a direct competition relationship and the competitiveness of a particular network item among many network items that have direct competition relationships with the particular network item may be quantified, so that the user may acquire more valuable network item association information.

The apparatus example embodiment is basically similar to the method example embodiment, so it is described simply. For related parts, reference may be made to the descriptions of the parts in the method example embodiment.

The example embodiments in the specification are described progressively, each example embodiment emphasizes a part different from other example embodiments, and identical or similar parts of the example embodiments may be obtained with reference to each other.

Those skilled in the art should understand that the example embodiments of the present disclosure may be provided as a method, an apparatus, or a computer program product. Therefore, the example embodiments of present disclosure may be implemented as a complete hardware example embodiment, a complete software example embodiment, or an example embodiment combining software and hardware. Moreover, the example embodiments of the present disclosure may be in the form of a computer program product implemented on one or more computer usable storage media (including, but not limited to, a magnetic disk memory, a CD-ROM, an optical memory and the like) including computer usable program codes.

In a typical configuration, the computer device includes one or more central processing units (CPUs), an I/O interface, a network interface, and a memory. The memory may include computer readable media such as a volatile memory, a Random Access Memory (RAM), and/or a non-volatile memory, e.g., a Read-Only Memory (ROM) or a flash RAM. The memory is an example of a computer readable medium. The computer readable medium includes non-volatile and volatile media as well as movable and non-movable media, and may implement information storage by means of any method or technology. Information may be a computer readable instruction, a data structure, and a module of a program or other data. An example of the storage medium of a computer includes, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission media, and may be used to store information accessed by the computing device. According to the definition in this text, the computer readable medium does not include transitory media, such as a modulated data signal and a carrier.

The example embodiments of the present disclosure are described with reference to flowcharts and/or block diagrams of the method, terminal device (system) and computer program product according to the example embodiments of the present disclosure. It should be understood that a computer program instruction may be used to implement each process and/or block in the flowcharts and/or block diagrams and combinations of processes and/or blocks in the flowcharts and/or block diagrams. These computer program instructions may be provided to a general-purpose computer, a special-purpose computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may also be stored in a computer readable memory that may instruct a computer or any other programmable data processing device to work in a particular manner, such that the instructions stored in the computer readable memory generate an artifact that includes an instruction apparatus. The instruction apparatus implements a function specified in one or more processes in the flowcharts and/or in one or more blocks in the block diagrams.

These computer program instructions may also be loaded onto a computer or another programmable data processing device, such that a series of operation steps are performed on the computer or another programmable device, thereby generating computer-implemented processing. Therefore, the instructions executed on the computer or another programmable device provide steps for implementing a function specified in one or more processes in the flowcharts and/or in one or more blocks in the block diagrams.

Although preferred example embodiments of the present disclosure have been described, those skilled in the art may make additional changes and modifications to these example embodiments once they know the basic inventive concept. Therefore, the appended claims are intended to be illustrated as including the preferred example embodiments and all changes and modifications falling in the scope of the example embodiments of the present disclosure.

Finally, it should be further noted that, in this text, the relational terms such as "first" and "second" are merely used to distinguish one entity or operation from another entity or operation, but do not necessarily require or imply any such actual relationship or sequence between these entities or operations. Moreover, the terms "include", "comprise" or their other variations are intended to cover non-exclusive inclusion, so that a process, a method, an object or a terminal device including a series of elements not only includes the elements, but also includes other elements not clearly listed, or further includes inherent elements of the process, method, object or terminal device. In a case without any more limitations, an element defined by "including a/an..." does not exclude that the process, method, object or terminal device including the element further has other identical elements.

A method for associating network items, an apparatus for associating network items, a method for calculating association information between network items, and an apparatus for calculating association information between network items provided in the present disclosure are described in detail above. Specific examples are used in this text to illustrate the principle and implementation manners of the present disclosure. The foregoing description of the example embodiments is merely used to help understand the methods of the present disclosure and their core ideas. Meanwhile, those of ordinary skill in the art may make changes to the specific implementation manners and application scope according to the idea of the present disclosure. In conclusion, the content of the specification should not be construed as a limitation to the present disclosure.

## Claims

1. A method for associating network items, the method comprising:
calculating a path weight of a jump path between network items according to jump behaviors of users between the network items during browsing;
calculating an item weight of each network item as a jumped-to network item according to the path weight of the jump path between the network items; and
selecting at least one network item as an associated network item of a current network item according to item weights.

2. The method of claim 1, wherein the calculating the item weight of each network item as a jumped-to network item according to the path weight of the jump path between the network items comprises:
calculating an item weight of a second-level network item as a jumped-to network item according to a path weight of a jump path from a starting first-level network item to the jumped-to second-level network item and an initial item weight of the first-level network item; and
iterating, according to the path weight and the item weight of the second-level network item, to calculate an item weight of an N^{th}-level network item, wherein N is greater than 2.

3. The method of claim 1, wherein the calculating the path weight of the jump path between the network items according to the jump behaviors of the users between the network items during browsing comprises:
calculating a competitive jump quantity of the jump path between the network items according to a jump quantity between the network items and a browsing quantity of the jumped-to network item; and
computing a proportion of a competitive jump quantity of a jump path from a network item in competitive jump quantities of all jump paths from the network item to obtain the path weight of the jump path between all the network items.

4. The method of claim 3, wherein:
the network items belong to a same network item category; and
the calculating the competitive jump quantity of the jump path between the network items according to the jump quantity between the network items and the browsing quantity of the jumped-to network item comprises:
computing a browse-to-purchase conversion rate of the item category to which the network items belong by using a total browsing quantity and a total purchase volume of all network items in the network item category to which the network items belong;
using a product of a purchase volume of the jumped-to network item and the browse-to-purchase conversion rate as a browsing quantity of the jumped-to network item; and
using a sum of the browsing quantity of the jumped-to network item and the jump quantity between all the network items as the competitive jump quantity between all the network items.

5. The method of claim 3, wherein before the calculating the path weight of the jump path between the network items, the method further comprises:
acquiring a purchase volume of the network items from a network item purchasing log and acquiring browsing quantities of the network items and the jump quantity between the network items from a network item browsing log.

6. The method of claim 2, wherein the calculating the item weight of the second-level network item as the jumped-to network item according to the path weight of the jump path from the starting first-level network item to the jumped-to second-level network item and the initial item weight of the first-level network item comprises:
searching for at least one first-level network item that is redirected to the second-level network item; and
computing the product of the path weight of the jump path from the first-level network item to the second-level network item, the initial item weight, and a preset iteration damping coefficient to serve as the item weight of the second-level network item.

7. The method of claim 2, wherein the iterating, according to the path weight and the item weight of the second-level network item, to calculate the item weight of the N^{th}-level network item comprises:
for the N^{th}-level network item, searching for the (N-1)^{th}-level network item that is redirected to the N^{th}-level network item; and
computing a product of a path weight of a jump path from the (N-1)^{th}-level network item to the N^{th}-level network item, an item weight of the (N-1)^{th}-level network item, and an iteration damping coefficient to serve as the item weight of the N^{th}-level network item.

8. The method of claim 1, wherein before the selecting at least one network item according to the item weights, the method further comprises:
using the network items as nodes, and using a jump path between a starting network item and a jumped-to network item as a directional side connecting the nodes to generate a node network graph that records competitive jump paths between the network items; and
transferring node identifiers of an N^{th}-level node and an (N-1)^{th}-level node adjacent to the N^{th}-level node to an (N+1)^{th}-level node and storing the node identifiers.

9. The method of claim 8, wherein the transferring node identifiers of the N^{th}-level node and the (N-1)^{th}-level node adjacent to the N^{th}-level node to the (N+1)^{th}-level node and storing the node identifiers comprises:
associating a node identifier of the (N-1)^{th}-level node with the adjacent N^{th}-level node; and
sending a node identifier of the N^{th}-level node and node identifiers of multiple (N-1)^{th}-level nodes associated with the N^{th}-level node to the adjacent (N+1)^{th}-level node and storing the node identifiers.

10. The method of claim 8, wherein the selecting at least one network item as the associated network item of the current network item according to the item weights comprises:
selecting at least one network item as the associated network item according to item weights corresponding to the node identifiers of the N^{th}-level node and the (N-1)^{th}-level node, with respect to the (N+1)^{th}-level node corresponding to the current network item.

11. A method for calculating association information between network items, the method comprising:
calculating a path weight of a jump path between network items according to jump behaviors of users between the network items during browsing; and
calculating an item weight of each network item as a jumped-to network item according to the path weight of the jump path between the network items.

12. The method of claim 11, further comprising:
pushing the item weight to a supplier of the network item.

13. An apparatus for associating network items, the apparatus comprising:
a path weight calculation module configured to calculate a path weight of a jump path between network items according to jump behaviors of users between the network items during browsing;
an item weight calculation module configured to calculate an item weight of each network item as a jumped-to network item according to the path weight of the jump path between the network items; and
an associated network item selecting module configured to select at least one network item as an associated network item of a current network item according to the item weights.

14. The apparatus of claim 13, wherein the item weight calculation module comprises:
an item weight calculation sub-module configured to calculate an item weight of a second-level network item as a jumped-to network item according to a path weight of a jump path from a starting first-level network item to the jumped-to second-level network item and an initial item weight of the first-level network item; and
an item weight iterative calculation sub-module configured to iterate, according to the path weight and the item weight of the second-level network item, to calculate an item weight of an N^{th}-level network item, wherein N is greater than 2.

15. The apparatus of claim 13, wherein the path weight calculation module comprises:
a competitive jump quantity calculation sub-module configured to calculate a competitive jump quantity of a jump path between the network items according to a jump quantity between the network items and a browsing quantity of the jumped-to network item; and
a competitive jump quantity proportion computing sub-module configured to compute a proportion of a competitive jump quantity of a jump path from a network item in competitive jump quantities of all jump paths from the network item, to obtain a path weight of a jump path between all the network items.

16. The apparatus of claim 15, wherein:
all the network items belong to a same network item category; and
the competitive jump quantity calculation sub-module comprises:
a browse-to-purchase conversion rate computing sub-module configured to compute a browse-to-purchase conversion rate of the item category to which the network items belong by using a total browsing quantity and a total purchase volume of all network items in the network item category to which the network items belong;
a browsing quantity computing sub-module configured to use a product of a purchase volume of the jumped-to network item and the browse-to-purchase conversion rate as a browsing quantity of the jumped-to network item; and
a competitive jump quantity computing sub-module configured to use the sum of the browsing quantity of the jumped-to network item and the jump quantity between all the network items as the competitive jump quantity between all the network items.

17. The apparatus of claim 15, further comprising:
a purchase volume and jump quantity acquisition module configured to acquire purchase volumes of the network items from a network item purchasing log and acquire browsing quantities of the network items and a jump quantity between the network items from a network item browsing log.

18. The apparatus of claim 14, wherein the item weight calculation sub-module comprises:
a first-level network item searching sub-unit configured to search for at least one first-level network item that is redirected to the second-level network item; and
a second-level network item computing sub-module configured to compute the product of the path weight of the jump path from the first-level network item to the second-level network item, the initial item weight, and a preset iteration damping coefficient to serve as the item weight of the second-level network item.

19. The apparatus of claim 14, wherein the item weight iterative calculation sub-module comprises:
an (N-1)^{th}-level network item searching sub-unit configured to: for the N^{th}-level network item, search for an (N-1)^{th}-level network item that is redirected to the N^{th}-level network item; and
an N^{th}-level network item computing sub-module configured to compute a product of a path weight of a jump path from the (N-1)^{th}-level network item to the N^{th}-level network item, an item weight of the (N-1)^{th}-level network item, and an iteration damping coefficient to serve as the item weight of the N^{th}-level network item.

20. The apparatus of claim 13, further comprising:
a node network graph generation module configured to use the network items as nodes and use a jump path between a starting network item and a jumped-to network item as a directional side connecting the nodes to generate a node network graph that records competitive jump paths between the network items; and
a node transfer and storing module configured to transfer node identifiers of an N^{th}-level node and an (N-1)^{th}-level node adjacent to the N^{th}-level node to an (N+1)^{th}-level node and store the node identifiers.

21. The apparatus of claim 20, wherein the node transfer and storing module comprises:
a node association sub-module configured to associate the node identifier of the (N-1)^{th}-level node with the adjacent N^{th}-level node; and
a node identifier sending and storing sub-module configured to send the node identifier of the N^{th}-level node and node identifiers of multiple (N-1)^{th}-level nodes associated with the N^{th}-level node to the adjacent (N+1)^{th}-level node and store the node identifiers.

22. The apparatus of claim 20, wherein the associated network item selecting module comprises:
an associated network item searching sub-module configured to select at least one network item as the associated network item according to item weights corresponding to the node identifiers of the N^{th}-level node and the (N-1)^{th}-level node that are stored in the (N+1)^{th}-level node corresponding to the current network item.

23. An apparatus for calculating association information between network items, the apparatus comprising:
a path weight calculation module configured to calculate a path weight of a jump path between network items according to jump behaviors of users between the network items during browsing; and
an item weight calculation module configured to calculate an item weight of each network item as a jumped-to network item according to the path weight of the jump path between the network items.

24. The apparatus of claim 23, further comprising:
an item weight pushing module configured to push the item weight to a supplier of the network item.
